# EUROPEAN PATENT APPLICATION

(11) **EP 2 790 090 A1**
(43) Date of publication of application: **15.10.2014**
(21) Application number: 12856051.3
(22) Date of filing: 28.11.2012
(51) Int. Cl.: G06F 3/033

(54) **ELECTRONIC STYLUS AND TRACKER**

(30) Priority: 07.12.2011 CN 201110403376
(71) Applicant: Shenzhen Yifang Digital Technology Co., Ltd., Shenzhen, Guangdong 518108 (CN)
(72) Inventor: WANG, Bin, Shenzhen Guangdong 518108 (CN); PAN, Xiaozhong, Shenzhen Guangdong 518108 (CN); Yitzhak, Zloter, Shenzhen Guangdong 518108 (CN); Gideon, Shenholz, Shenzhen Guangdong 518108 (CN); LIU, Wensheng, Shenzhen Guangdong 518108 (CN)
(74) Representative: Sun, Yiming
(86) International application number: PCT/CN2012/085389
(87) International publication number: WO 2013/083010

(57) **Abstract**

An electronic stylus and a tracker comprises an outer casing body (132), a tracking circuit (40), a data interface (46), an ultrasonic wave receiver (36), and an infrared ray receiver (38). An end of the outer casing body (132) extends to form an accommodating cavity (150) for inserting an electronic stylus (110). The electronic stylus (110) comprises a casing body (112), a writing implement (14), a signal transmitter (16), and a power supply (18). A nib (24) of the writing implement (14) extends out of the casing body (112). The signal transmitter (16) is disposed at a position near the nib (24). By means of the technical solution of the present invention, the electronic stylus and the tracker can be combined at will and are convenient to store and carry, and the electronic stylus and the tracker that form a complete set is not easily disordered, thereby bringing convenience to a user.

## Description

### FIELD OF THE INVENTION

The present invention relates to electronic writing technology and, in particular, it concerns an electronic stylus and a tracker used together with the electronic stylus.

### BACKGROUND OF THE INVENTION

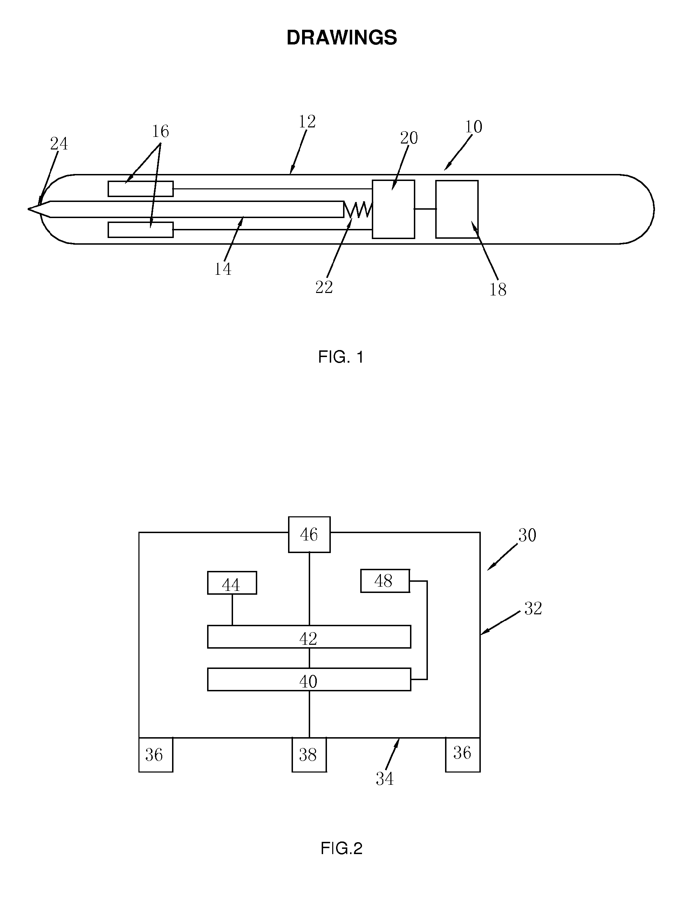

FIG. 1 is a partial schematic view and geometric diagram of an early electronic stylus 10. The electronic stylus 10 includes a typical elongated cylinder-shape outer casing 12 and other parts as follows: a writing implement 14, one or more than one signal transmitter 16, a power supply 18 and a pressure sensitive switch 20 which is connected to the writing implement 14 via a spring 22. The writing implement 14 has a nib 24 extending out of one end of the outer casing 12.

The writing implement 14 is used for writing on a suitable surface by means of its nib 24. Usually, the surface is common paper and the writing implement 14 is used for writing on the paper by means of common ink. For example, in an embodiment of the electronic stylus 10, the nib 24 is a tip used for sucking the ink contained in an ink bottle by means of the writing implement 14. In other embodiment of the electronic stylus 10, for example, disclosed in a patent application US2004/0144575, the nib 24 can be charged and then write on charged electronic paper or magnetized paper.

One or more than one (usually several) signal transmitter is disposed on a position near the nib 24 for transmitting pulse signals, so as to record the movements of the following nib 24 as a writing end of the electronic stylus 10 when it writes on related plane. The signal transmitter 16 can obtain electric energy from the battery 18 via switch 20. And in general, the switch 20 keeps off-state, and when the nib 24 contacts with a surface to write, the writing implement 14 will push the spring 22 to close the switch 20 thereby activating the signal transmitter 16.

There is no simple illustration of some components of the electronic stylus, such as a circuit for controlling the signal transmitted from the signal transmitter 16, shown in FIG. 1.

The electronic stylus 10 needs to work in conjunction with a tracker which is provided for tracking and recording the movements of the nib 24 writing on a corresponding plane. FIG. 2 is a plan view combined with principle block diagram of a tracker 30. The tracker 30 works together with the electronic stylus, and one or more than one signal transmitter 16 is ultrasonic wave receiver and one or more than one signal transmitter 16 is infrared ray receiver. There are two ultrasonic wave receivers 36 and one infrared ray receiver 38 provided on side face 34 of the outer casing 32 of tracker 30, all of which are connected to tracking circuit 40 in operation. The ultrasonic wave receivers 36, infrared ray receiver 38 and tracker 30 operate in a way and such a way is described in U.S. Patent NO. 6151014 that it is provided for tracking the movement of nib 24 of electronic stylus shown in FIG. 1. The signal transmitter 16 sends out synchronous and omnidirectional infrared ray and ultrasonic pulse periodically, the infrared ray pulses will be received by the infrared ray receiver 38 and the ultrasonic pulses will be received by the ultrasonic wave receivers 36. The receiving time delay of single infrared ray pulse and related ultrasonic pulse and the interactive time delay of the ultrasonic pulse between two ultrasonic wave receivers 36 are measured by the tracking circuit 40 and then location of the nib24, relative to the tracker 30, is positioned by the tracking circuit 40 via triangulation accordingly. The measured instantaneous positions of nib 24 will be sent to record/playback circuit 42 by the tracking circuit 40, and then the record/playback circuit 42 take the measure as user record of the stylus and record it to a frash memory 44. After recording, user can download his/her writing record from the frash memory 44 by means of the record/playback circuit 42 and a USB port 46. A chargeable battery 48, which is capable of charging via the USB port, is provided for supplying power to the tracking circuit 40, record/playbck circuit 42 and frash memory 44.

The above-mentioned electronic stylus and tracker are independent individuals, namely, both of them are independent from each other. Such a condition is easy to bring confusion, especially when more than one tracker and electronic stylus are put together, and additionally, with this structure the electronic stylus and tracker are not easy to carry.

### SUMMARY OF THE INVENTION

There provided by the present invention is a tracker used together with an electronic stylus as its cap, by means of such a combination, the technical problem that difficult to carry and easy to bring confusion will be solved.

The electronic stylus and tracker provided by the present invention includes an electronic stylus and a tracker. The tracker includes an outer casing body, a tracking circuit disposed within the outer casing body, a data interface disposed on the outer casing body and signal receivers disposed at surface of the outer casing body, and an end of the outer casing body extends to form an accommodating cavity for inserting an electronic stylus. The electronic stylus includes a casing body, a writing implement disposed within the casing body, a signal transmitter disposed within the casing body and a power supply disposed within the casing body; the writing implement has a nib extending out of the casing body; and the signal transmitter is disposed at a position near the nib. The accommodating cavity has a tube shape and the accommodating cavity is capable of fastening the electronic stylus by means of friction between the casing body of the electronic stylus and the accommodating cavity. There are charging electrodes provided on inner wall of said accommodating cavity and connected to said tracking circuit; there are contact points provided on outer surface of the casing body of the electronic stylus; said power supply is rechargeable power supply; said contact points are connected to the power supply; and said charging electrodes contact with said contact points when the electronic stylus inserting into the accommodating cavity.

There is a clip hinged on outer surface of said outer casing body via a hinged shaft. The tracker further includes a record/playback circuit, a flash memory and a rechargeable battery; said data interface is connected to the tracking circuit via the record/playback circuit; said flash memory is connected to the record/playback circuit; and the rechargeable battery is connected to the tracking circuit. The electronic stylus further includes a pressure sensitive switch disposed within the casing body, the pressure sensitive switch being disposed between the signal transmitter and the power supply, and the pressure sensitive switch being connected to a tail end of the writing implement via a spring.

By means of the technical solution of the present invention, the electronic stylus and the tracker can be combined at will and are convenient to store and carry, and the electronic stylus and the tracker that form a complete set is not easily disordered, thereby bringing convenience to a user.

### BRIEF DESCRIPTION OF THE DRAWINGS

FIG. 1 is a schematic view of a conventional electronic stylus;
FIG. 2 is a schematic view of a conventional tracker;
FIG. 3 is a schematic view of an electronic stylus assembled with a tracker of the present invention;
FIG. 4 is a schematic view of the electronic stylus of the present invention;
FIG. 5 is a schematic view of the tracker of the present invention; and
FIG. 6 is another schematic view of the tracker of the present invention.

### DETAILED DESCRIPTION OF ILLUSTRATED EMBODIMENTS

A best embodiment of the present invention is herein described, by way of example only, with reference to the accompanying drawings.

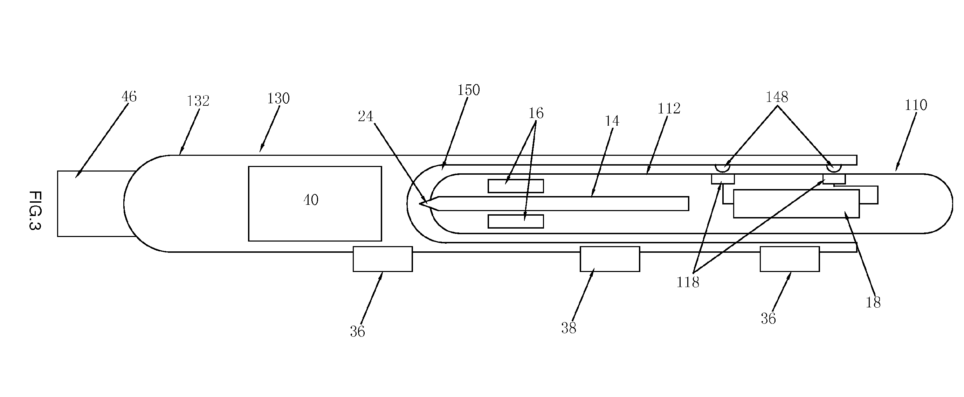

As shown from FIG. 3 to FIG. 6, the electronic stylus and tracker includes an outer casing body 132, a tracking circuit 40 disposed within the outer casing body 132, a data interface 46 disposed on the outer casing body 132, and an ultrasonic wave receiver 36 and an infrared ray receiver 38 both of which are disposed at the surface of outer casing body 132. An end of the outer casing body 132 extends to form an accommodating cavity 150 for inserting an electronic stylus 110. The electronic stylus 110 includes a casing body 112, a writing implement 14 disposed within the casing body 112, a signal transmitter 16 disposed within the casing body 112 and a power supply 18 disposed within the casing body 112. The writing implement 14 has a nib 24 extending out of the casing body 112. And the signal transmitter 16 is disposed at a position near the nib 24. The accommodating cavity 150 has a tube shape and this tubular accommodating cavity 150 is provided for fastening the electronic stylus 110 by means of friction between the casing body 112 of the electronic stylus 110 and the accommodating cavity 150. As shown in FIG. 3 again, it is a schematic view of the electronic stylus 110 and related tracker 130 of the present invention. The casing body 112 of the electronic stylus 110 is elongated so as to be cylinder-shaped which is similar to the outer casing 12 of the electronic stylus 10. But unlike the outer casing body 32 of tracker 30, the shape of outer casing body of the present invention has no direct relation with its function, and the outer casing body 132 of tracker 130 appears to be a cap of electronic stylus 110 when the electronic stylus without being used. Specifically, the outer casing body 132 includes an accommodating cavity 150 pressed to the electronic stylus 110 when the electronic stylus without being used. The casing body 112 and at least part of outer casing body 132 have contact with each other in the accommodating cavity 150, and their relative position is maintained by means of their friction, thereby enabling the electronic stylus 110 and the tracker 130 to be treated as a whole.

As shown in FIG. 3, there are charging electrodes 148 provided on the inner wall of the accommodating cavity 150, which are connected to the tracking circuit 40 and there are contact points 118 provided on the outer surface of the casing body 112 of electronic stylus 110. The power supply 18 is rechargeable power supply and the contact points are connected to the power supply 18. When the electronic stylus 110 inserting into the accommodating cavity 150, the charging electrodes 148 will contact with the contact points 118. The connection of charging electrodes 148 and contact points 118 can be achieved by the ways as follows but not limited to these. One is that the charging electrodes 148 on the accommodating cavity 150 are convex and the contact points 118 on the casing body 112 are concave; another is that the contact points 118 on the casing body 112 are elongated contact points formed by extending in circumferential direction of the casing body 112; and still another is that the charging electrodes 148 are ring contact points disposed on the inner wall of the accommodating cavity 150.

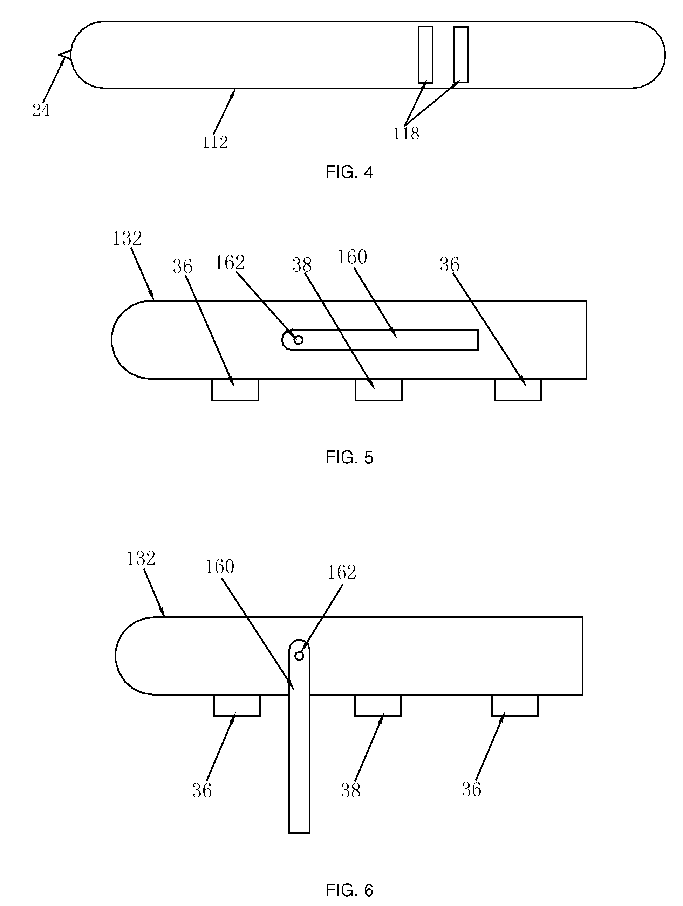

As shown in FIG. 5 and FIG. 6, there is a clip hinged on the outer surface of the outer casing body 132 via hinged shaft 162.

As shown in FIG. 2, the tracker 130 further includes a record/playback circuit 42, a flash memory 44 and a rechargeable battery 48; the data interface 46 is connected to the tracking circuit 40 via the record/playback circuit 42; the flash memory 44 is connected to the record/playback circuit 42; and the rechargeable battery 48 is connected to the tracking circuit 40. The electronic stylus 110 further includes a pressure sensitive switch 20 disposed within the casing body 112 and this pressure sensitive switch 20 is arranged between the signal transmitter 16 and the power supply 18. The pressure sensitive switch 20 is connected to a tail end of the writing implement 14 via a spring 22.

The electronic stylus 110 inherits writing implement 14, signal transmitter 16 and power supply 18 of the electronic stylus 10. The electronic stylus 110 also inherits the switch 20 and spring 22, both of which are not shown in FIG. 3 clearly. Similarly, the tracker 130 inherits ultrasonic wave receivers 36 and infrared ray receiver 38 mounted on the side face 134 of outer casing body 132 as them mounted on the side face 34 of outer casing body 32 of tracker 30. The tracker 130 also inherits tracking circuit 40 and data interface 46 (USB port) of the tracker 30. The tracker 130 further inherits record/playback circuit 42, frash memory 44 and rechargable battery 48 of the tracker 30, similarly, these three components are not clearly shown in illustration of FIG. 3. The electronic stylus 110 includes two conductive contact points 118 and the tracker 130 includes two charging electrodes 148 so that the power supply 18 is capable of charging via USB port 46. The contact points are positioned on the casing body 112 of electronic stylus 110 and the charging electrodes 148 are positioned in the accommodating cavity 150, thus, when storing and transporting, the electronic stylus 110 is capable of being inserted into the accommodating cavity 150 and the contact points contact with the charging electrodes 148 as shown in FIG. 3. The contact points 118 actually are rings facing to radial direction (that is, perpendicular to the lengthwise direction of casing body 112) and being level with the outer surface of casing body 112. Such a geometrical shape of contact points allows user to insert electronic stylus 110 into the accommodating cavity 150 without concern for the direction of rotation of the electronic stylus 110 in the accommodating cavity 150. However the electronic stylus 110 rotates in the accommodating cavity 150, it is ensured that the contact points 118 always contact with the charging electrodes 148.

As shown in FIG. 5 and FIG. 6, which show an appearance of the tracker 130, a clip 160 is provided on the external of outer casing body 132 of tracker 30 and it can swing around a hinged shaft 162. FIG. 5 shows that the clip 160 is parallel to the lengthwise direction of the tracker 130. In the configuration of FIG. 5, when the electronic stylus 110 have been inserted into the accommodating cavity 150 for storage and transport, a user of the electronic stylus 110 and tracker 130 can put the electronic stylus 110 and tracker 130 on his/her pocket like carrying a traditional electronic stylus. FIG. 6 shows that the clip 160 is perpendicular to the lengthwise direction of the tracker 130. In the configuration of FIG. 6, the tracker 130 can track the trace written by the nib 24 as electronic stylus 110 and make a judgment for the paper written by the electronic stylus 110.

Above descriptions of embodiments are provided for illustrating the present invention, so as to facilitate understanding and it is to be understood that the invention is not to be limited to the disclosed embodiments. Any technique extension and recreation according to the present invention should be included within the scope of protection of the invention.

## Claims

1. An electronic stylus and tracker, the tracker (130) comprising an outer casing body (132), a tracking circuit (40) disposed within the outer casing body (132), a data interface (46) disposed on the outer casing body (132), an ultrasonic wave receiver (36) and an infrared ray receiver (38) both of which are disposed at a surface of the outer casing body (132), wherein an end of the outer casing body (132) extends to form an accommodating cavity (150) for inserting an electronic stylus (110).

2. The electronic stylus and tracker according to claim 1, wherein said electronic stylus (110) comprises a casing body (112), a writing implement (14) disposed within the casing body (112), a signal transmitter (16) disposed within the casing body (112) and a power supply (18) disposed within the casing body (112); the writing implement (14) has a nib (24) extending out of the casing body (112); and the signal transmitter (16) is disposed at a position near the nib (24).

3. The electronic stylus and tracker according to claim 1 or 2, wherein said accommodating cavity (150) has a tube shape and the accommodating cavity (150) is capable of fastening the electronic stylus (110) by means of friction between the casing body (112) of the electronic stylus (110) and the accommodating cavity (150).

4. The electronic stylus and tracker according to claim 3, wherein there are charging electrodes (148) provided on inner wall of said accommodating cavity (150) and connected to said tracking circuit (40); there are contact points (118) provided on outer surface of the casing body (112) of the electronic stylus (110); said power supply (18) is rechargeable power supply; said contact points (118) are connected to the power supply (18); and said charging electrodes (148) contact with said contact points (118) when the electronic stylus (110) inserting into the accommodating cavity (150).

5. The electronic stylus and tracker according to claim 4, wherein the charging electrodes (148) on said accommodating cavity (150) are convex and the contact points (118) on the casing body (112) are concave.

6. The electronic stylus and tracker according to claim 4, wherein the contact points (118) are elongated contact points formed by extending in circumferential direction of the casing body (112).

7. The electronic stylus and tracker according to claim 4, wherein the charging electrodes (148) are ring contact points disposed on inner wall of the accommodating cavity (150).

8. The electronic stylus and tracker according to claim 4, wherein the signal transmitter (16) of said electronic stylus (110) is infrared ray signal transmitter or ultrasonic wave signal transmitter; and the ultrasonic wave receiver (36) and infrared ray receiver (38) of said tracker (130) are provided to match with the signal transmitter (16).

9. The electronic stylus and tracker according to claim 1 or 2, wherein there is a clip (160) hinged on outer surface of said outer casing body (132) via a hinged shaft (162).

10. The electronic stylus and tracker according to claim 1 or 2, wherein said tracker (130) further comprises a record/playback circuit (42), a flash memory (44) and a rechargeable battery (48); said data interface (46) is connected to the tracking circuit (40) via the record/playback circuit (42); said flash memory (44) is connected to the record/playback circuit (42); and the rechargeable battery (48) is connected to the tracking circuit (40).

11. The electronic stylus and tracker according to claim 2, wherein said electronic stylus (110) further comprises a pressure sensitive switch (20) disposed within the casing body (112), the pressure sensitive switch (20) is disposed between the signal transmitter (16) and the power supply (18), and the pressure sensitive switch (20) is connected to a tail end of the writing implement (14) via a spring (22).
